(19) Europäisches Patentamt
European Patent Office
Office européen des brevets

(11) EP 1 041 091 A1

(12) # EUROPEAN PATENT APPLICATION
published in accordance with Art. 158(3) EPC

(43) Date of publication:
**04.10.2000 Bulletin 2000/40**

(21) Application number: **98957219.3**

(22) Date of filing: **08.12.1998**

(51) Int. Cl.$^7$: **C08F 36/06**, C08F 4/642

(86) International application number:
**PCT/JP98/05540**

(87) International publication number:
**WO 99/29747 (17.06.1999 Gazette 1999/24)**

(84) Designated Contracting States:
**DE FR GB IT**

(30) Priority: **08.12.1997 JP 35421297**
**22.05.1998 JP 15688798**

(71) Applicants:
- **JAPAN as Represented by DIRECTOR GENERAL OF AGENCY OF INDUSTRIAL SCIENCE AND TECHNOLOGY**
**Chiyoda-ku, Tokyo 100-0013 (JP)**
- **Japan Chemical Innovation Institute**
**Tokyo 111-0052 (JP)**

(72) Inventors:
- **SOGA, Kazuo**
**Nomi-gun Ishikawa 923-1226 (JP)**
- **ASAI, Michihiko**
**Tsukuba-shi Ibaraki 305-0044 (JP)**
- **SUZUKI, Yasuzo**
**Tsukuba-shi Ibaraki 305-0031 (JP)**
- **MIYAZAWA, Akira**
**Tsukuba-shi Ibaraki 305-0035 (JP)**
- **TSUCHIHARA, Kenji**
**Tsukuba-shi Ibaraki 305-0031 (JP)**
- **MURATA, Masahide**
**Bunkyo-ku Tokyo 112-0005 (JP)**
- **OZAKI, Hiroyuki**
**Tsukuba-shi Ibaraki 305-0053 (JP)**
- **KAWABE, Masanao**
**Tsukuba-shi Ibaraki 305-0032 (JP)**
- **FUKUI, Yoshifumi**
**Tsukuba-shi Ibaraki 305-0051 (JP)**
- **KASE, Toshio**
**Tsukuba-shi Ibaraki 305-0035 (JP)**

(74) Representative:
**VOSSIUS & PARTNER**
**Siebertstrasse 4**
**81675 München (DE)**

(54) **BUTADIENE POLYMER, PROCESS FOR THE PREPARATION OF CONJUGATED DIENE POLYMERS, AND CATALYST**

(57) A butadiene based polymer wherein the content of units having a cis-bond in the total units derived from a conjugated diene monomer having 4 carbon atoms in the main skeletal structure is at least 50%; Mw/Mn is not larger than 1.9; and Mw is in the range of 1,000 to 10,000,000. The butadiene based polymer is produced by polymerizing a conjugated diene in the presence of a catalyst comprising (A) a compound of a transition metal of group IV of the periodic table, having a cyclopebtadienyl structural unit having a carbonyl group or a sulfonyl group as a substituent, and (B) an aluminoxane, or an ionic compound capable of reacting with the transition metal compound (A) to give a cationic transition metal compound.

EP 1 041 091 A1

## Description

### TECHNICAL FIELD

This invention relates to a butadiene based polymer having a high cis-bond content and a low (Mw/Mn) ratio of weight average molecular weight (Mw) to number average molecular weight (Mn), a process for producing a conjugated diene polymer, and a novel catalyst having a high activity for polymerization of a conjugated diene.

### BACKGROUND ART

Copolymerization of ethylene or α-olefin with butadiene using a catalyst ingredient comprising a metallocene compound of group IV transition metal was proposed in Makromol. Chem., Macromol. Symp., 1986, vol.4, p103-118; Makromol. Chem., 1991, vol.192, p2591-2601; and Japanese Patent Publication (Tokuhyou) H1-501633. A catalyst ingredient comprising a rare earth-toluene complex was proposed in Japanese Unexamined Patent Publication (hereinafter abbreviated to "JP-A") No. H7-112989. However, these proposed catalysts do not exhibit a high activity for homopolymerization of a conjugated diene such as butadiene or isoprene, and stereoregulated polymerization is difficult to conduct.

A catalyst comprising a combination of a metallocene compound selected from $(C_5H_5)TiCl_3$, $(C_5H_5)Ti(OBu)_3$, $(C_5H_5)TiCl_2$ • 2THF and $[(C_5H_5)TiCl_2]_n$ with methylaluminoxane for polymerization of 1,3-dienes is described in Makromol. Chem., Macromol. Symp., 1995, vol.89, p383-392. A catalyst comprising a combination of an aluminoxane with a transition metal compound for polymerization of 1,3-dienes is described in JP-A H1-254713, JP-A H3-188109 and JP-A H4-331213. When butadiene is polymerized by these catalysts, a polymer having a relatively high cis-bond content is produced, but, its molecular weight is relatively low.

A catalyst for polymerization of a conjugated diene, comprising a combination of a transition metal compound, represented by the following formula II, of group IV of the periodic table with an aluminoxane is described in JP-A H9-77818, which has a high activity and gives a polymer with controlled stereoregularity. It was described that, when butadiene was polymerized with this catalyst, the polymerization proceeded at a high activity and a polymer having a cis-bond content of 96% was obtained. However, this patent publication is silent on the molecular weight of the polymer and regulation of the molecular weight distribution.

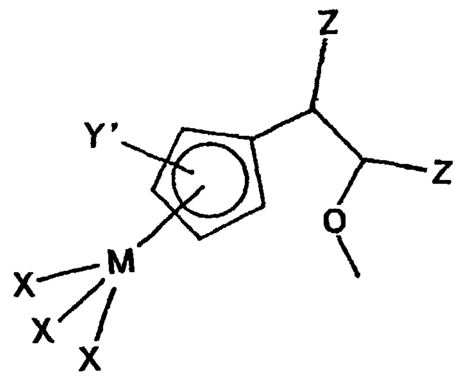

II

wherein M is a transition metal of group IV, X is hydrogen, a halogen, a $C_{1-12}$ hydrocarbon group or a $C_{1-12}$ hydrocarbon-oxy group, y' is $C_{1-12}$ hydrocarbon group, which may form a ring together with the cyclopentadienyl group, and Z is hydrogen or a $C_{1-12}$ hydrocarbon group.

It is known that a high-cis butadiene polymer having a cis-bond content of at least 90% and a high molecular weight is produced by a typical Co, Ni, Ti or Nd coordination polymerization catalyst. However, this polymer had a ratio (Mw/Mn) of weight average molecular weight (Mw) to number average molecular weight (Mn) larger than 2.0. In contrast, an organic lithium catalyst gives a butadiene polymer having a high molecular weight and a narrow molecular weight distribution, i.e., small Mw/Mn ratio. However, this butadiene polymer has a low cis-bond content of not larger than 40%. Thus, according to the prior art, it is difficult to obtain a butadiene polymer which can be produced at a high activity and has a high molecular weight, a narrow molecular weight distribution and a high cis-bond content.

A metallocene catalyst represented by the following formula I':

$$MeO(CO)CH_2CpTiCl_3 \quad I'$$

which comprises a compound of a transition metal of group IV of the periodic table, is described in Makromol. Chem., Macromol. Symp., 1997, vol.118, p55-60. But, it is not known that this catalyst is used for polymerization of a conjugated diene.

DISCLOSURE OF THE INVENTION

Objects of the present invention are to provide a butadiene based polymer having a high cis-bond content and a low Mw/Mn ratio; a process for producing a conjugated diene polymer using a catalyst with a high activity; and a catalyst exhibiting a high activity for a polymerization of a conjugated diene and giving a conjugated diene polymer having a narrow molecular weight distribution and controlled stereoregularity.

In one aspect of the present invention, there is provided a butadiene based polymer, which is a homopolymer of a conjugated diene monomer having 4 carbon atoms in the main skeletal structure, or a copolymer of a conjugated diene monomer having 4 carbon atoms in the main skeletal structure with a monomer copolymerizable therewith, and characterized in that the content of units having a cis-bond in the total units derived from the conjugated diene monomer is at least 50%; the ratio (Mw/Mn) of weight average molecular weight (Mw) to number average molecular weight (Mn) is not larger than 1.9; and the weight average molecular weight (Mw) is in the range of 1,000 to 10,000,000.

The molecular weight of the butadiene based polymer preferably satisfy the following formula (1):

$$\log(Mw/Mn) < 0.162 \times \log(Mw) - 0.682 \qquad (1)$$

In another aspect of the present invention, there is provided a process for producing a conjugated diene polymer, characterized in that a conjugated diene monomer is polymerized alone, or with a monomer copolymerizable therewith in the presence of a catalyst comprising (A) a compound of a transition metal of group IV of the periodic table having a cyclopentadienyl structural unit having a carbonyl group or a sulfonyl group as a substituent, and (B) an aluminoxane or an ionic compound capable of reacting with the transition metal compound (A) to give a cationic transition metal compound.

In still another aspect of the present invention, there is provided a catalyst for use in polymerization of a conjugated diene to produce a conjugated diene polymer, characterized by comprising (A) a compound of a transition metal of group IV of the periodic table having a cyclopebtadienyl structural unit having a carbonyl group or a sulfonyl group as a substituent, and (B) an aluminoxane or an ionic compound capable of reacting with the transition metal compound (A) to give a cationic transition metal compound.

BEST MODE FOR CARRYING OUT THE INVENTION

<u>Polymerization Catalyst</u>

The catalyst of the present invention used for polymerization of a conjugated diene comprises (A) a compound of a transition metal of group IV of the periodic table having a cyclopebtadienyl structural unit having a carbonyl group or a sulfonyl group as a substituent, and (B) an aluminoxane or an ionic compound capable of reacting with the transition metal compound (A) to give a cationic transition metal compound.

The above-mentioned transition metal compound (A) with a cyclopentadienyl structural unit having a carbonyl substituent or a sulfonyl substituent preferably includes compounds of a transition metal of group IV of the periodic table, represented by the following formula I:

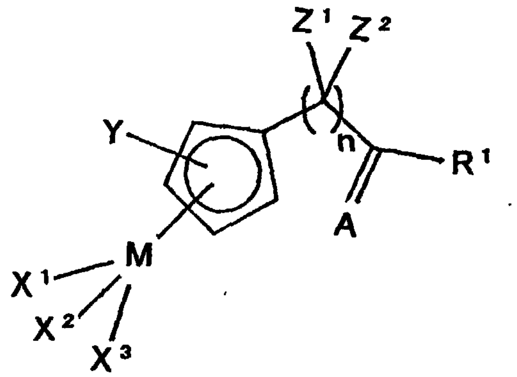

I

wherein M is a transition metal of group IV, $X^1$, $X^2$ and $X^3$ are hydrogen, a halogen, a $C_{1-12}$ hydrocarbon group or a $C_{1-12}$ hydrocarbon-oxy group, Y is hydrogen or a $C_{1-12}$ hydrocarbon group which may form a ring together with the cyclopentadienyl group, $Z^1$ and $Z^2$ are hydrogen or a $C_{1-12}$ hydrocarbon group, A is oxygen or sulfur, $R^1$ is hydrogen, a $C_{1-12}$ hydrocarbon group or a $C_{1-12}$ hydrocarbon-oxy group, and n is an integer of O to 5.

The transition metal compound of formula I is preferably a metallocene compound having as a ligand one cyclopentadienyl group or cyclopentadienyl group with a substituent such as an alkyl, aryl or cycloalkyl group, or fused cyclic substituents. The cyclopentadienyl group as a ligand has an atomic group having a structural unit represented by >C=O or >C=S as a substituent. The transition metal (M in formula I) of group IV of the periodic table is preferably Ti, Zr or Hf, and more preferably Ti. As preferable examples of $X^1$, $X^2$ and $X^3$, there can be mentioned halogens such as fluorine, chlorine, bromine and iodine, preferably chlorine; hydrocarbon groups including alkyl groups such as methyl and neopentyl, and aralkyl groups such as benzyl; and hydrocarbon-oxy groups including alkoxy groups such as methoxy, ethoxy and isopropoxy, and aralkyloxy groups such as benzyloxy. Of the hydrocarbon-oxy groups, an alkoxy group is preferable. As specific examples of Y, there can be mentioned hydrogen, alkyl groups such as methyl, ethyl, propyl, isopropyl, butyl and t-butyl, aryl groups such as phenyl, and aralkyl groups such as benzyl. Y may include a hydrocarbon group containing a silicon atom, such as trimethylsilyl. Y connected to the cyclopentadienyl ring may form, together with the cyclopentadienyl group, a polycyclic group such as, for example, indenyl and fluorenyl groups. As specific examples of $Z^1$ and $Z^2$, there can be mentioned hydrogen, alkyl groups such as methyl, ethyl, propyl, isopropyl, butyl and t-butyl, aryl groups such as phenyl, and aralkyl groups such as benzyl. $R^1$ includes hydrogen, hydrocarbon groups and hydrocarbon-oxy groups. As specific examples of the hydrocarbon groups, there can be mentioned alkyl groups such as methyl, ethyl, propyl, isopropyl, butyl and t-butyl, aryl groups such as phenyl, and aralkyl groups such as benzyl; and, as specific examples of the hydrocarbon-oxy groups, there can be mentioned alkoxy groups such as methoxy, ethoxy, propoxy, isopropoxy, butoxy and t-butoxy, aryloxy groups such as phenoxy, and aralkyloxy groups such as benzyloxy. Of these, hydrocarbon-oxy groups are preferable, and alkoxy groups are especially preferable. n is preferably 1 or 2, and more preferably 1.

As specific examples of the compound (A) with a transition metal of group IV of the periodic table, there can be mentioned those which are represented by the formulae: $MeO(CO)CH_2CpTiCl_3$, $MeO(CO)CH(Me)CpTiCl_3$ and {3-[$MeO(CO)CH_2$]}(1-Me)$CpTiCl_3$.

The procedure by which the transition metal compound (A) is prepared is not particularly limited. For example, $MeO(CO)CH_2CpTiCl_3$ is prepared by the procedure described in Macromol. Symp., 1997, vol. 118, p55-60.

An aluminoxane used in combination with the compound (A) with a transition metal of group IV of the periodic table, is a straight-chain or cyclic polymer, which is an organic aluminumoxy compound and is represented by the following formula III:

$$(-Al(R^2)O-)_n \qquad \text{III}$$

wherein $R^2$ is a $C_{1-10}$ hydrocarbon group, which includes, for example, methyl, ethyl, propyl and isobutyl. Of these, metyl is most preferable. $R^2$ may have a substituent such as halogen and/or an $R^3O$ group wherein $R^3$ is a $C_{1-10}$ hydrocarbon group, which includes, for example, alkyl groups such as methyl, ethyl, propyl and isobutyl. Of these, methyl is most preferable. n is a degree of polymerization, and at least 5, preferably at least 10.

As specific examples of the ionic compound capable of reacting with the transition metal compound (A) to form a cationic complex, there can be mentioned ionic compounds which are a combination of tetrakis(pentafluorophenyl) borate anion with an amine cation having an active proton such as, for example, $(CH_3)_2N(C_6H_5)H^+$, a tri-substi-

tuted carbonium cation such as $(C_6H_5)_3C^+$, a carborane cation, a metal carborane cation or a transition metal-having ferrocenium cation.

The catalyst of the invention may be used in combination with a hydrogenated metal compound, an organic metal compound containing a main-group metal element of groups I, II and III of the periodic table, an organic metal halide compound and a hydrogenated organic metal compound, for polymerization of a conjugated monomer. As specific examples of these compounds, there can be mentioned, hydrogenated metal compounds such as NaH, LiH, $CaH_2$, $LiAlH_4$ and $NaBH_4$; main-metal group-containing organic metal compounds such as methyllithium, butyllithium. phenyllithium, dibutylmagnesium, trimethylaluminum, triethylaluminum, triisobutylaluminum, trihexylaluminum and trioctylaluminum; organic metal halide compounds such as ethylmagnesium chloride, butylmagnesium chloride, dimethylaluminum chloride, diethylaluminum chloride, sesquiethylaluminum chloride and ethylaluminum dichloride; and hydrogenated organic metal compounds such as diethylaluminum hydride and sesquiethylaluminum hydride.

The transition metal compound and/or the ionic compound used in the present invention can be used in a form supported by a carrier. The carrier includes inorganic compounds and organic high-molecular compounds. The inorganic compounds preferably include inorganic oxides, inorganic chlorides and inorganic hydroxides. The inorganic compounds may contain a minor amount of carbonate salts or sulfate salts. As preferable specific examples of the inorganic compounds, there can be mentioned inorganic oxides such as silica, alumina, magnesia, titania, zirconia and calcia, and inorganic chlorides such as magnesium chloride. These inorganic compounds are preferably in the form of finely divided porous particles having an average particle diameter of 5 to 150 μm and a specific surface area of 2 to 800 $m^2/g$. The porous particles may be heat-treated, for example, at a temperature of 100 to 800°C. The organic high-molecular compounds preferably include those which have as a side chain an aromatic ring, a substituted aromatic ring, or functional groups such as hydroxyl, carboxyl, ester and halogen. As specific examples of the organic high-molecular compounds, there can be mentioned α-olefin homopolymers and copolymers of ethylene, propylene or polybutene, which have a functional group introduced therein by chemical modification; and homopolymers and copolymers of acrylic acid, methacrylic acid, vinyl chloride, vinyl alcohol, styrene and divinylbenzene, which may have a functional group introduced by chemical modification. The organic high-molecular compounds are preferably in the form of finely divided spherical particles having an average particle diameter of 5 to 250 μm. When the transition metal compound and/or the ionic compounds are supported by these carriers, deposition of the catalyst onto a polymerization reactor can be prevented or minimized.

Monomers

As specific examples of the conjugated diene monomer having 4 carbon atoms in the main skeletal structure used in the invention, there can be mentioned 1,3-butadiene, 2-methyl-1,3-butadiene, 2,3-dimethyl-1,3-butadiene and 2-chloro-1,3-butadiene. Further, conjugated diene monomers also used in the present invention include these conjugated diene monomers with 4 carbon atoms in the main skeletal structure, and 1,3-pentadiene and 1,3-hexadiene. Of these conjugated dienes, 1,3-butadiene and 2-methyl-1,3-butadiene are preferable. 1,3-butadiene is most preferable. These conjugated diene monomers may be used either alone or as a combination of at least two thereof. Most preferably 1,3-butadiene is used alone.

As specific examples of the monomers copolymerizable with the conjugated monomers, there can be mentioned aromatic vinyl monomers such as styrene, o-methylstyrene, p-methylstyrene, m-methylstyrene, 2,4-dimethylstyrene, ethylstyrene, p-tert.-butylstyrene, α-methylstyrene, α-methyl-p-methylstyrene, o-chlorostyrene, m-chlorostyrene, p-chlorostyrene, p-bromostyrene, 2-methyl-1,4-dichlorostyrene, 2,4-dibromostyrene and vinylnaphthalene; olefins such as ethylene, propylene and 1-butene; cycloolefins such as cyclopentene, dicyclopentene, 2-norbornene and 5-ethylidene-2-norbornene; non-conjugated dienes such as 1,5-hexadiene, 1,6-heptadiene and 1,7-octadiene; and acrylic monomers such as methyl acrylate, methyl methacrylate, acrylonitrile, metahcrylonitrile, acrylic amide and methacrylic amide.

Process for Producing Conjugated Diene Polymer

The polymerization of a conjugated diene monomer alone or in combination with a copolymerizable monomer is carried by a method selected from the following methods (1) to (6) using a catalyst comprising the transition metal compound (A) and the aluminoxane and/or the ionic compound (B).

(1) Component (A) is previously contacted with component (B), and then the mixture is placed into contact with a monomer to conduct polymerization.
(2) Component (A) is previously contacted with a monomer, and then the mixture is placed into contact with component (B) to conduct polymerization.
(3) Component (B) is previously contacted with a monomer, and then the mixture is placed into contact with component (A) to conduct polymerization.

(4) A solution of component (A) and a solution of component (B) are mixed together, the mixed solution is placed in contact with a carrier, the thus-formed supported catalyst is separated from the mixed solution, and then the supported catalyst is placed into contact with a monomer to conduct polymerization.

(5) A solution of component (A) is contacted with a carrier, the thus-obtained solution is then contacted with a solution of component (B), and the thus-formed supported catalyst is separated from the mixed solution, and then the supported catalyst is placed into contact with a monomer to conduct polymerization.

(6) A solution of component (B) is contacted with a carrier, the thus-obtained solution is then contacted with a solution of component (A), and the thus-formed supported catalyst is separated from the mixed solution, and then the supported catalyst is placed into contact with a monomer to conduct polymerization.

The liquid medium in which component (A) and component (B) are dissolved or dispersed to form a slurry includes inert hydrocarbons such as butane, pentane, hexane, heptane, octane, cyclohexane, mineral oil, benzene, toluene and xylene; and halogenated hydrocarbons such as chloroform, methylene chloride, dichloroethane and chlorobenzene.

The contact of component (A), component (B) and the monomer is carried out usually at a temperature of -100°C to +100°C for 1 second to 180 minutes.

The amount of the catalyst used is such that the amount of the transition metal compound (A) is usually in the range of 100 to 0.001 milli-moles, preferably 10 to 0.01 milli-moles and more preferably 5 to 0.1 milli-moles, per mole of the monomer. When an aluminoxane is used as component (B), the ratio of aluminoxane/transition metal compound (A) is usually in the range of 10 to 10,000 by mole, preferably 100 to 5,000 by mole. When the ionic compound is used as component (B), the ratio of ionic compound/transition metal compound (A) is usually in the range of 0.01 to 100 by mole, preferably 0.1 to 10 by mole. Further, when an organic metal compound is used in combination, the ratio of organic metal compound/transition metal compound (A) is usually in the range of 0.1 to 10,000 by mole, preferably 1 to 1,000 by mole.

The homopolymerization of a conjugated diene monomer, and the copolymerization of a conjugated diene monomer with a copolymerizable monomer are usually carried out in an inert hydrocarbon medium by solution polymerization, slurry polymerization or bulk polymerization using a monomer as a diluent. A vapor phase polymerization procedure using a vapor phase stirred reaction vessel or a vapor phase fluidized bed can alos be emplyed. These polymerization procedures can be carried out at a temperature of -100°C to +100°C and a pressure of ordinary pressure to 30 $kg/cm^2$ for 1 second to 360 minutes. The inert hydrocarbon medium used includes those which are hereinbefore recited as for the initiation of polymerization.

It is possible that a conjugated diane monomer is preliminarily polymerized by the above-mentioned polymerization procedure, and, by using the thus-obtained polymer as a catalyst, a further conjugated diene monomer is polymerized. This procedure is advantageous for enhancing polymerization activity, keeping the form of a solid catalyst, making easy the operation of introducing a catalyst into a polymerization vessel for the further polymerization, preventing or minimizing the deposition of catalyst on a wall of the polymerization vessel, and enhancing the fluidity of the reaction mixture in a vapor phase polymerization vessel.

To control the molecular weight of polymer, a chain transfer agent can be added. As the chain transfer agent, those which are conventionally used for the production of cis-1,4-polybutadiene are used. Arenes such as 1,2-butadiene and cyclic dienes such as cyclooctadiene are especially preferable.

The termination of polymerization is carried out usually by adding a short-stopper into the polymerization system when the predetermined conversion is reached. The short-stopper used includes, for example, alcohols such as methanol, ethanol, propanol, butanol and isobutanol.

After the termination of polymerization, the polymer is recovered. The recovering procedure is not particularly limited, and, for example, steam-stripping is used.

Butadiene Based Polymer

The catalyst used exhibits a high activity, and thus, the butadiene based polymer of the invention can be produced with a high efficiency. Among the conjugated diene polymers produced by the process of the present invention, the following butadiene based polymers are of a novel structure.

The novel butadiene based polymer is a copolymer having at least 50%, preferably at least 70%, more preferably at least 80% and most preferably at least 90% of recurring units derived from a conjugated diene monomer having 4 carbon atoms in the main skeletal structure, preferably 1,3-butadiene, or a homopolymer of a conjugated diene monomer having 4 carbon atoms in the main skeletal structure, preferably 1,3-butadiene. A most preferable butadiene based polymer is a homopolymer of 1,3-butadiene. If the content of the units derived from a conjugated diene monomer having 4 carbon atoms in the main skeletal structure is too low, good characteristics attributed to the cis-bond are not

obtained.

The butadiene based polymer of the present invention is characterized in that the content of cis-bond in the total recurring units derived from a conjugated diene monomer having 4 carbon atoms in the main skeletal structure is at least 50%, preferably at least 80% and more preferably at least 90%. If the content of cis-bond is too low, tensile strength is reduced and the properties desired for rubber are deteriorated. The cis-bond used herein means 1,4-cis-bond.

The butadiene based polymer of the present invention has a weight average molecular weight (Mw) in the range of 1,000 to 10,000,000, preferably 5,000 to 5,000,000 and more preferably 10,000 to 3,000,000. If the molecular weight is too small, the mechanical strength is poor and the properties attributed to a high-molecular compound are deteriorated. In contrast, if the molecular weight is too large, molding of the polymer becomes difficult. The molecular weight of the butadiene based polymer is determined by gel permeation chromatography (GPC) using a calibration curve drawn on a standard polybutadiene.

The butadiene based polymer of the present invention has a ratio (Mw/Mn) of weight average molecular weight (Mw) to number average molecular weight (Mn) of not larger than 1.9, preferably not larger than 1.8 and more preferably not larger 1.7. If the Mw/Mn ratio is too large, abrasion resistance and other physical properties of the cross-linked are deteriorated. Further, the weight average molecular weight (Mw) of the butadiene based polymer and the ratio (Mw/Mn) thereof preferably satisfy the following formula (1):

$$\log(Mw/Mn) < 0.162 \times \log(Mw) - 0.682 \qquad (1)$$

The invention will now be specifically described by the following examples.

Example 1

Synthesis of (2-methoxycarbonylmethyl)cyclopentadienyltrichlorotitanium $MeO(CO)CH_2CpTiCl_3$

A solution of 30.6 g (200 mmol) of methyl bromoacetate in 100 ml of tetrahydrofuran was gradually dropwise added to a solution of 32 g (200 mmol) of trimethylsilylcyclopentadienylsodium in 400 ml of tetrahydrofuran in an argon atmosphere at -78°C. After completion of the addition, the reaction mixture was further maintained at -78°C overnight with stirring. Then tetrahydrofuran was distilled off under a reduced pressure, and the obtained solid was filtered off and subjected to vacuum distillation (65-66°C/3 mmHg) to give about 30 g of (2-methoxycarbonylmethyl)trimethylsilylcyclopentadiene [$TMSCpCH_2COOMe$]. Yield: 70%. The chemical structure was confirmed by $^1$H-NMR.

$^1$H-NMR (ppm, TMS, $CDCl_3$): 6.55-6.20(m, ring H on Csp2), 3.5-3.35(m,ring H on Csp3),3.15-2.98(m, ring H on Csp3),3.69(s, 2H), 3.67(s, 3H), -0.22(s, 9H)

To a solution of 4.2 g (20 mmol) of (2-methoxycarbonylmethyl)trimethylsilylcyclopentadiene in 100 ml of dry methylene chloride, 3.8 g (20 mmol) of titanium tetrachloride was added at 0°C in an argon atmosphere. The mixture was stirred at room temperature for 3 hours. The reaction mixture was cooled to -30°C to precipitate 4.0 g of orange crystal. Yield: 70%. The chemical structure was confirmed by $^1$H-NMR.

$^1$H-NMR(ppm, TMS, $CDCl_3$): 7.05(s, 4H), 3.92(s, 2H), 3.76(s, 3H)

Polymerization of Butadiene (1)

A sealable pressure-resistant glass ampoule having an inner volume of 150 ml was charged with 52.4 g of toluene and 5.5 g of butadiene in a nitrogen atmosphere, and the content was cooled to -25°C. A solution in toluene of 0.0123 mmol of the above-mentioned transition metal compound $MeO(CO)CH_2CpTiCl_3$ in toluene and 12.3 mmol of methylaluminoxane (supplied Tosoh-Akzo Co.) were added to the ampoule. Butadiene was polymerized at -25°C for 20 minutes. Thereafter a small amount of an aqueous acidic methanol was added to terminate the polymerization. The polymerization mixture was poured in a large amount of acidic methanol to precipitate a white solid. The solid was filtered off and dried to give a butadiene polymer. The yield of polymer was 38%.

The polymerization activity, as expressed by the yield of polymer per 1 mmol of the transition metal contained in the transition metal compound and per hour of reaction time, was 510 g/mmol-M.h.

The stereostructure, i.e., cis-bond content, was determined by NMR analysis as follows. The content of 1,4-bond in the polymer was determined by $^1$H-NMR analysis (1,4-bond 5.4 -5.6 ppm, 1,2-bond 5.0-5.1 ppm). The content of cis-bond in the determined 1,4-bond was calculated from $^{13}$C-NMR (cis 28 ppm, trans 33 ppm), thus determining the cis-bond content in the total polymer. The content of cis-bond was 92%.

The weight average molecular weight (Mw) as determined by gel permeation chromatography (GPC) analysis was 2,120,000. The molecular weight distribution (Mw/Mn) was 1.63. For the GPC analysis, a column of G-7000 connected to G-5000 was used. The weight average molecular weight (Mw) and the number average molecular weight (Mn) were determined from a calibration curve drawn by using a standard polybutadiene specimen (supplied by Polymer Laboratories Co.). It was confirmed that log(Mw/Mn) = 0.212 and $0.162\times\log(Mw) - 0.682 = 0.343$, and thus, the formula (1) was satisfied.

Comparative Example 1

Synthesis of (2-methoxyethyl)cyclopentadienyltrichlorotitanium ($MeOCH_2CH_2CpTiCl_3$)

A solution of 18.9 g (200 mmol) of chloroethyl methyl ether in 100 ml of tetrahydrofuran (THF) was gradually dropwise added to a solution of 32 g (200 mmol) of trimethylsilylcyclopentadienylsodium in 400 ml of THF in an argon atmosphere at -78°C. After completion of the addition, the reaction mixture was heated under reflux. Then THF was distilled off under a reduced pressure, and the obtained solid was filtered off and subjected to vacuum distillation (80°C/l mmHg) to give about 33 g of [(3-methoxy)ethyl]trimethylsilylcyclopentadiene [$TMSCpCH_2CH_2OMe$]. Yield: 85%. The chemical structure was confirmed by $^1$H-NMR.

$^1$H-NMR (ppm, TMS, $CDCl_3$): 6.55-6.20(m, ring H on Csp2), 3.5-3.35(m,ring H on Csp3), 3.15-2.98(m, ring H on Csp3), 3.61(m, 2H), 3.40(s, 3H), 3.02(m, 2H), 0.22(s, 9H)

To a solution of 0.50 g (2.5 mmol) of the obtained $TMSCpCH_2CH_2OMe$ in 20 ml of dry methylene chloride, 0.25 ml (2.2 mmol) of titanium tetrachloride was added at -78°C in an argon atmosphere. The mixture was stirred at room temperature for 3 hours. The reaction mixture was cooled to -78°C to precipitate 0.4 g of orange crystal. Yield: 70%. $^1$H-NMR analysis revealed that the product was (2-methoxyethyl)cyclopentadienyltrichlorotitanium ($MeOCH_2CH_2CpTiCl_3$).

$^1$H-NMR (ppm, TMS, $CDCl_3$): 6.91(s, 4H), 3.70(t, 2H), 3.37(s, 3H), 3.10(t, 2H)

Polymerization of Butadiene (2)

Butadiene was by the same procedures as described in Example 1 except that $MeOCH_2CH_2CpTiCl_3$ was used instead of $MeO(CO)CH_2CpTiCl_3$, and the polymerization time was changed to 20 hours. The yield of polymer was 12%, the polymerization activity was 2.7 g/mmol-M.h, the content of cis-bond was 96%, the weight average molecular weight (Mw) was 3,480,000, and the molecular weight distribution (Mw/Mn) was 3.66. It was confirmed that log(Mw/Mn) = 0.563 and $0.162\times\log(MW) - 0.682 = 0.378$, and thus, the formula (1) was not satisfied.

INDUSTRIAL APPLICABILITY

The catalyst of the present invention exhibits a high activity and gives a well-stereoregulated polymer. The butadiene based polymer obtained by using this catalyst is characterized as having a high cis-bond content, a high molecular weight and a low molecular weight distribution (Mw/Mn).

The butadiene based polymer of the present invention has good abrasion resistance and mechanical properties.

**Claims**

**1.** A butadiene based polymer, which is a homopolymer of a conjugated diene monomer having 4 carbon atoms in the main skeletal structure, or a copolymer of a conjugated diene monomer having 4 carbon atoms in the main skeletal structure with a monomer copolymerizable therewith, and characterized in that the content of units having a cis-bond in the total units derived from the conjugated diene monomer is at least 50%; the ratio (Mw/Mn) of weight average molecular weight (Mw) to number average molecular weight (Mn) is not larger than 1.9; and the weight average molecular weight (Mw) is in the range of 1,000 to 10,000,000.

**2.** The butadiene based polymer according to claim 1, wherein the conjugated diene monomer is at least one monomer selected from 1,3-butadiene, 2-methyl-1,3-butadiene, 2,3-dimethyl-1,3-butadiene and 2-chloro-1,3-butadiene.

**3.** The butadiene based polymer according to claim 1, wherein the conjugated diene monomer is at least one monomer selected from 1,3-butadiene and 2-methyl-1,3-butadiene.

**4.** The butadiene based polymer according to any of claims 1 to 3, which is a copolymer having at least 50% by weight of recurring units derived from the conjugated diene monomer, or a homopolymer of the conjugated diene monomer.

**5.** The butadiene based polymer according to claim 1, which is polybutadiene.

**6.** The butadiene based polymer according to any of claims 1 to 5, wherein the content of units having a cis-bond in the total units derived from the conjugated diene monomer is at least 80%.

**7.** The butadiene based polymer according to any of claims 1 to 6, wherein the ratio (Mw/Mn) of weight average molecular weight (Mw) to number average molecular weight (Mn) is not larger than 1.8.

**8.** The butadiene based polymer according to any of claims 1 to 7, wherein the weight average molecular weight (Mw) is in the range of 5,000 to 5,000,000.

**9.** The butadiene based polymer according to any of claims 1 to 8, wherein the weight average molecular weight (Mw) and the ratio (Mw/Mn) of weight average molecular weight (Mw) to number average molecular weight (Mn) satisfy the following formula (1):

$$\log(Mw/Mn) < 0.162\times\log(Mw) - 0.682 \qquad (1)$$

**10.** A process for producing a conjugated diene polymer, characterized in that a conjugated diene monomer is polymerized alone, or with a monomer copolymerizable therewith, in the presence of a catalyst comprising (A) a compound of a transition metal of group IV of the periodic table having a cyclopentadienyl structural unit having a carbonyl group or a sulfonyl group as a substituent, and (B) an aluminoxane or an ionic compound capable of reacting with the transition metal compound (A) to give a cationic transition metal compound.

**11.** The process for producing a conjugated diene polymer according to claim 10, wherein the conjugated diene monomer is at least one monomer selected from 1,3-butadiene, 2-methyl-1,3-butadiene, 2,3-dimethyl-1,3-butadiene and 2-chloro-1,3-butadiene.

**12.** The process for producing a conjugated diene polymer according to claim 10, wherein the conjugated diene monomer is at least one monomer selected from 1,3-butadiene and 2-methyl-1,3-butadiene.

**13.** The process for producing a conjugated diene polymer according to any of claims 10 to 12, wherein said compound (A) of a transition metal of group IV of the periodic table having a cyclopentadienyl structural unit having a carbonyl group or a sulfonyl group as a substituent is a transition metal compound represented by the following formula I:

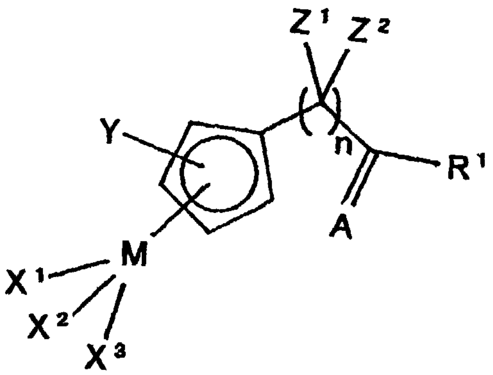

I

wherein M is a transition metal of group IV, $X^1$, $X^2$ and $X^3$ are hydrogen, a halogen, a $C_{1-12}$ hydrocarbon group or a $C_{1-12}$ hydrocarbon-oxy group, Y is hydrogen or a $C_{1-20}$ hydrocarbon group which may form a ring together with the cyclopentadienyl group, $Z^1$ and $Z^2$ are hydrogen or a $C_{1-12}$ hydrocarbon group, A is oxygen or sulfur, $R^1$ is

hydrogen, a C1-12 hydrocarbon group or a C1-12 hydrocarbon-oxy group, and n is an integer of O to 5.

**14.** The process for producing a conjugated diene polymer according to claim 13, wherein, in the transition metal compound (A) of formula I, the transition metal (M in formula I) of group IV of the periodic table is selected from Ti, Zr and Hf; $X^1$, $X^2$ and $X^3$ are selected from, as a halogen, fluorine, chlorine, bromine and iodine atoms; as a hydrocarbon group, alkyl groups and aralkyl groups; and, as a hydrocarbon-oxy group, alkoxy groups and aralkyloxy groups; Y is selected from hydrogen, alkyl groups, aryl groups, aralkyl groups and silicon atom-containing hydrocarbon groups, and Y connected to the cyolopentadienyl ring may form, together with the cyclopentadienyl group, a polycyclic group; $Z^1$ and $Z^2$ are selected from hydrogen, alkyl groups, aryl groups and aralkyl groups; $R^1$ is selected from hydrogen, alkyl groups, aryl groups, aralkyl groups, alkoxy groups, aryloxy groups and aralkyloxy groups; and n is 1 or 2.

**15.** The process for producing a conjugated diene polymer according to claim 13, wherein the transition metal compound (A) of formula I is selected from $MeO(CO)CH_2CpTiCl_3$, $MeO(CO)CH(Me)CpTiCl_3$ and {3-[$MeO(CO)CH_2$]}(1-Me)$CpTiCl_3$.

**16.** The process for producing a conjugated diene polymer according to any of claims 10 to 15, wherein the aluminoxane used in combination with the transition metal compound (A) is an organic aluminumoxy compound represented by the following formula III:

$$(-Al(R^2)O-)_n \qquad III$$

wherein $R^2$ is a C1-10 hydrocarbon group, which may have at least one substituent selected from a halogen atom and an $R^3O$ group wherein $R^3$ is a C1-10 hydrocarbon group, and n is at least 5.

**17.** The process for producing a conjugated diene polymer according to any of claims 10 to 15, wherein the ionic compound capable of reacting with the transition metal compound (A) to give a cationic transition metal compound is an ionic compound which is a combination of tetrakis(pentafluorophenyl) borate anion with a cation selected from an amine cation having an active proton, a tri-substituted carbonium cation, a carborane cation, a metal carborane cation and a transition metal-having ferrocenium cation.

**18.** The process for producing a conjugated diene polymer according to any of claims 10 to 17, wherein the transition metal compound (A) and the ionic compound (B) are used in a form supported by a carrier, which is selected from finely divided particles of an inorganic oxide or salt having an average particle diameter of 5 to 150 μm and a specific surface area of 2 to 800 $m^2/g$, and finely divided particles of an organic high-molecular compound having as a side chain an aromatic ring, a substituted aromatic ring, or a functional group, and an average particle diameter of 5 to 250 μm.

**19.** The process for producing a conjugated diene polymer according to any of claims 10 to 18, wherein the amount of the catalyst is such that the amount of the transition metal compound (A) is in the range of 100 to 0.001 milli-moles per mole of the monomer.

**20.** The process for producing a conjugated diene polymer according to any of claims 10 to 19, wherein the ratio of aluminoxane/transition metal compound (A) is in the range of 10 to 10,000 by mole, and the ratio of ionic compound/transition metal compound (A) is in the range of 0.01 to 100 by mole.

**21.** The process for producing a conjugated diene polymer according to any of claims 10 to 20, wherein the polymerization is carried out in the co-presence of an organic metal compound selected from a hydrogenated metal compound, an organic metal compound containing a main-group metal element of groups I, II and III of the periodic table, an organic metal halide compound and a hydrogenated organic metal compound.

**22.** A catalyst for use in polymerization of a conjugated diene to produce a conjugated diene polymer, characterized by comprising (A) a compound of a transition metal of group IV of the periodic table, having a cyclopebtadienyl structural unit having a carbonyl group or a sulfonyl group as a substituent, and (B) an aluminoxane or an ionic compound capable of reacting with the transition metal compound (A) to give a cationic transition metal compound.

**23.** The catalyst for the polymerization of a conjugated diene according to claim 22, wherein said compound (A) of a transition metal of group IV of the periodic table having a cyclopentadienyl structural unit having a carbonyl group

or a sulfonyl group as a substituent is a transition metal compound represented by the following formula I:

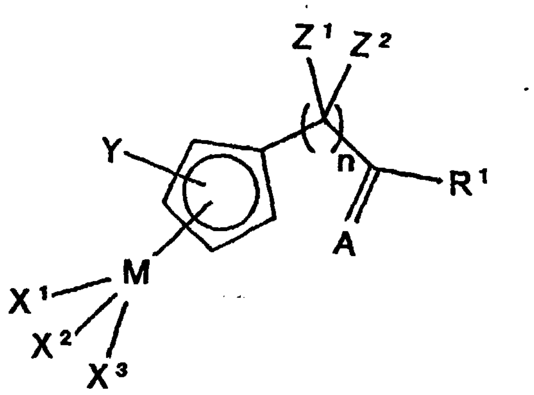

I

wherein M is a transition metal of group IV, $X^1$, $X^2$ and $X^3$ are hydrogen, a halogen, a $C_{1-12}$ hydrocarbon group or a $C_{1-12}$ hydrocarbon-oxy group, Y is hydrogen or a $C_{1-20}$ hydrocarbon group which may form a ring together with the cyclopentadienyl group, $Z^1$ and $Z^2$ are hydrogen or a $C_{1-12}$ hydrocarbon group, A is oxygen or sulfur, $R^1$ is hydrogen, a $C_{1-12}$ hydrocarbon group or a $C_{1-12}$ hydrocarbon-oxy group, and n is an integer of O to 5.

**24.** The catalyst for the polymerization of a conjugated diene according to claim 23, wherein, in the transition metal compound (A) of formula I, the transition metal (M in formula I) of group IV of the periodic table is selected from Ti, Zr and Hf; $X^1$, $X^2$ and $X^3$ are selected from, as a halogen, fluorine, chlorine, bromine and iodine atoms; as a hydrocarbon group, alkyl groups and aralkyl groups; and, as a hydrocarbon-oxy group, alkoxy groups and aralkyloxy groups; Y is selected from hydrogen, alkyl groups, aryl groups, aralkyl groups and silicon atom-containing hydrocarbon groups, and Y connected to the cyclopentadienyl ring may form, together with the cyclopentadienyl group, a polycyclic group; $Z^1$ and $Z^2$ are selected from hydrogen, alkyl groups, aryl groups and aralkyl groups; $R^1$ is selected from hydrogen, alkyl groups, aryl groups, aralkyl groups, alkoxy groups, aryloxy groups and aralkyloxy groups; and n is 1 or 2.

**25.** The catalyst for the polymerization of a conjugated diene according to claim 23, wherein the transition metal compound (A) of formula I is selected from $MeO(CO)CH_2CpTiCl_3$, $MeO(CO)CH(Me)CpTiCl_3$ and $\{3\text{-}[MeO(CO)CH_2]\}(1\text{-}Me)CpTiCl_3$.

**26.** The catalyst for the polymerization of a conjugated diene according to any of claims 22 to 25, wherein the aluminoxane used in combination with the transition metal compound (A) is an organic aluminumoxy compound represented by the following formula III:

$$(\text{-}Al(R^2)O\text{-})_n \qquad \text{III}$$

wherein $R^2$ is a $C_{1-10}$ hydrocarbon group, which may have at least one substituent selected from a halogen atom and an $R^3O$ group wherein $R^3$ is a $C_{1-10}$ hydrocarbon group, and n is at least 5.

**27.** The catalyst for the polymerization of a conjugated diene according to any of claims 22 to 25, wherein the ionic compound capable of reacting with the transition metal compound (A) to give a cationic transition metal compound is an ionic compound which is a combination of tetrakis(pentafluorophenyl) borate anion with a cation selected from an amine cation having an active proton, a tri-substituted carbonium cation, a carborane cation, a metal carborane cation and a transition metal-having ferrocenium cation.

**28.** The catalyst for the polymerization of a conjugated diene according to any of claims 22 to 27, wherein the ratio of aluminoxane/transition metal compound (A) is in the range of 10 to 10,000 by mole, and the ratio of ionic compound/transition metal compound (A) is in the range of 0.01 to 100 by mole.

## INTERNATIONAL SEARCH REPORT

International application No.
PCT/JP98/05540

A. CLASSIFICATION OF SUBJECT MATTER
Int.Cl[6] C08F36/06, C08F4/642

According to International Patent Classification (IPC) or to both national classification and IPC

B. FIELDS SEARCHED

Minimum documentation searched (classification system followed by classification symbols)
Int.Cl[6] C08F36/06, C08F4/642

Documentation searched other than minimum documentation to the extent that such documents are included in the fields searched
Jitsuyo Shinan Koho 1926-1998 Toroku Jitsuyo Shinan Koho 1994-1998
Kokai Jitsuyo Shinan Koho 1971-1998

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP, 9-302035, A (Ube Industries,Ltd.), 25 November, 1997 (25. 11. 97), Claims ; page 2, right column, line 30 to page 4, left column, line 49 (Family: none) | 1-9<br>10-28 |
| X | JP, 9-151219, A (Nippon Zeon Co., Ltd.), 10 June, 1997 (10. 06. 97), Claims ; page 9, left column, lines 1 to 17 (Family: none) | 1-9 |
| X | JP, 8-325330, A (Nippon Zeon Co., Ltd.), 10 December, 1996 (10. 12. 96), Claims ; page 12, left column, lines 23 to 43 (Family: none) | 1-9 |
| X | JP, 3-45609, A (Ube Industries,Ltd.), 27 February, 1991 (27. 02. 91), Claims ; page 2, lower right column, line 1 to page 3, lower right column, line 2 (Family: none) | 1-9 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 2 March, 1999 (02. 03. 99) | 16 March, 1999 (16. 03. 99) |
| Name and mailing address of the ISA/<br>Japanese Patent Office | Authorized officer |
| Facsimile No. | Telephone No. |

Form PCT/ISA/210 (second sheet) (July 1992)

## INTERNATIONAL SEARCH REPORT

International application No. PCT/JP98/05540

C (Continuation). DOCUMENTS CONSIDERED TO BE RELEVANT

| Category* | Citation of document, with indication, where appropriate, of the relevant passages | Relevant to claim No. |
|---|---|---|
| X | JP, 63-92620, A (Ube Industries,Ltd.), 23 April, 1988 (23. 04. 88), Claims (Family: none) | 1-9 |
| X<br>A | JP, 7-118318, A (Idemitsu Kosan Co., Ltd.), 9 May, 1995 (09. 05. 95), Claims ; page 2, right column, line 41 to page 7, right column, line 49 ; page 8, right column, line 40 to page 9, left column, line 8 (Family: none) | 10-14, 16-24, 26-28<br>15, 25 |
| A | JP, 8-113610, A (Ube Industries,Ltd.), 7 May, 1996 (07. 05. 96), Claims (Family: none) | 1-28 |

Form PCT/ISA/210 (continuation of second sheet) (July 1992)